Europäisches Patentamt

European Patent Office

Office européen des brevets

(11) Publication number: **0 054 413**
**B1**

(12) **EUROPEAN PATENT SPECIFICATION**

(45) Date of publication of patent specification: **05.06.85**

(21) Application number: **81305826.0**

(22) Date of filing: **10.12.81**

(51) Int. Cl.⁴: **H 04 N 5/76,** H 04 N 5/91,
G 11 B 27/10

(54) **Combined television camera and recording apparatus.**

(30) Priority: **15.12.80 US 216170**

(43) Date of publication of application:
**23.06.82 Bulletin 82/25**

(45) Publication of the grant of the patent:
**05.06.85 Bulletin 85/23**

(84) Designated Contracting States:
**AT DE FR GB**

(56) References cited:
**DE-A-2 701 630**
**FR-A-2 339 307**
**US-A-3 197 559**
**US-A-3 470 317**
**US-A-3 962 725**
**US-A-4 277 729**

(73) Proprietor: **RCA CORPORATION**
**30 Rockefeller Plaza**
**New York, NY 10020 (US)**

(72) Inventor: **Dischert, Robert Adams**
**16 Bloomer Drive**
**Burlington New Jersey 08106 (US)**

(74) Representative: **Pratt, Richard Wilson et al**
**c/o RCA International Limited Norfolk House 31**
**St. James's Square**
**London, SW1Y 4JR (GB)**

Courier Press, Leamington Spa, England.

## Description

This invention relates to a television camera combined with apparatus for recording on a medium which may be elongated such as tape, and which includes a means for producing relative movement between a transducer and the medium. One example of such a recording apparatus is described in US Patent U.S.—A—3197559, and another in US Patent U.S.—A—3962725.

In, for example, electronic news-gathering (ENG) applications, a portable television camera is customarily taken to the scene of a news event. Sometimes the television signal generated by the camera is sent by a communications link such as a microwave link to a central point for utilization, but more commonly the signal is recorded by a portable video tape recorder (VTR) at the news scene. This avoids the need to set up and take down communications links and provides a permanent record regardless of atmospheric conditions that may affect that link. The portable VTR used for recording the video is often in operation while being carried. In some cases, the VTR is carried by one member of a news team while the camera is carried by another member. Furthermore, it has been proposed to combine the recorder and the television camera into a single portable unit.

The video tape recorders used for ENG applications are almost universally of the helical-scan type in which a high tape-to-transducer relative velocity is achieved by the use of a rapidly rotating headwheel bearing the transducers, see e.g., U.S.—A—3197559. In studio machines powered from the alternating-current mains, powerful drive motors and high-gain servo loops can be used to maintain the headwheel velocity constant, but in portable equipment the power drain from the associated batteries is limited and therefore the forces which can be impressed upon the headwheel are limited. As desscribed in European Patent Application 0051406-AI published 12 May 1982, the motion imparted to the housing of a portable VTR while it is being carried causes accelerations of the headwheel relative to the baseplate or housing, and thereby causes variations in the velocity of the transducers relative to the tape, which can be corrected by a particular orientation of the headwheel relative to the motion. This particular orientation may not be compatible with the desired overall shape of the VTR. A method of operating a portable video camera in conjunction with a longitudinal VTR is described in U.S. Patent, U.S.—A—3,962,725. In this arrangement, a control signal is prerecorded on the magnetic tape onto which the video signals are to be recorded. The prerecorded control signal is played back during the operation of recording the video and is used to control the rate of image scanning by the associated video camera. Thus, unavoidable changes in the speed with which the tape is driven during recording vary the rate of generation of the video signals. Such an arrangement, however, requires prerecording of the magnetic tape to be used, thereby decreasing the amount of tape available for audio and video recording. Furthermore, a dropout of the prerecorded track information impairs the ability of the arrangement to produce a usable recorded tape. In addition, it is not possible to reuse the tape following bulk erasure without rerecording the control signal.

According to one aspect of the invention there is provided

a combination of a television camera for generating television signals and an apparatus for recording the signals on a recording medium, comprising:

an image transducing means for producing image signals representing an image, by recurrently scanning the image, the scanning of the image being controllable;

record transducing means for transducing the signals onto the recording medium; rotatable means for establishing relative movement between the record transducing means and the recording medium;

indicating means coupled to the rotatable means for indicating its rate of rotation;

rotation control means including a source of reference signals having a predetermined frequency characteristic representative of a desired rate of rotation of the rotatable means, the rotation control means being responsive to the indicated and desired rates of rotation to tend to cause the rotatable means to rotate at the desired rate over a relatively long term and

image transducer control means responsive to the indicated rate of rotation to vary the rate of recurrence of the scanning and the rate of scanning in response to relatively short-term variations in the rate of rotation so as to place the image signals on the recording medium as if the rotation took place at the desired rate.

For a better understanding of the invention, and to show how it may be carried into effect, reference will now be made, by way of example to the accompanying drawings in which:

Figure 1 illustrates a combination of a camera and recorder;

Figure 2 is a diagram partially in block form and partially in pictorial form illustrating a combined camera and recording apparatus according to the invention;

Figure 3 illustrates timing waveforms and patterns imprinted on a signal generating wheel of the apparatus of Figure 2;

Figure 4 includes a schematic diagram (Figure 4a) of a deflection amplifier which may be used in the apparatus of Figure 2 together with associated voltage waveforms (figures 4b and 4c): and

Figure 5 illustrates a deflection amplifier;

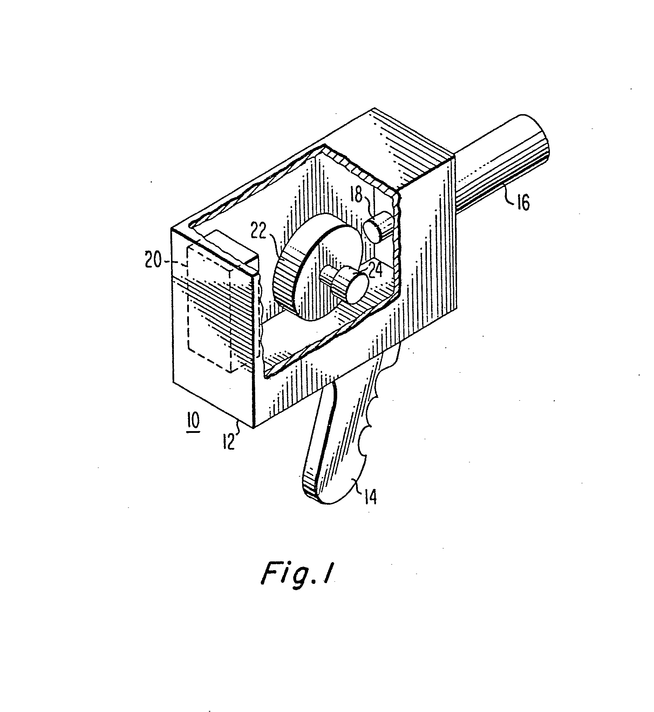

In Figure 1, a physically-combined camera and video tape recorder (VTR) designated generally as 10 includes a body 12 connected to a handle 14. An optical lens arrangement 16 is coupled to an optical-to-electrical transducer illustrated as 18.

Transducer 18 may include one or more camera tubes such as vidicons or it may include a solid-state image sensor such as a CCD array. Included within housing 12 is a cartridge 20 for holding the magnetic tape (not shown). During operation, the magnetic tape is wound about a headwheel 22 driven by a motor 24.

As described in European Patent Application 0051406A1, published 12th May 1982, headwheel 22 may be subject to changes in velocity resulting from vertical planning of the combined camera and VTR 10. Such changes in rotational velocity change the scanning rate at which magnetic heads (not shown in Figure 1) associated with headwheel 22 scan, thereby affecting the distance scanned by the recording transducers across the magnetic tape per unit time. Consequently, regularly recurring vertical and horizontal sync signals included with the video are not transduced to regularly spaced positions on the tape. This in turn may lead to difficulties in reproduction upon playback.

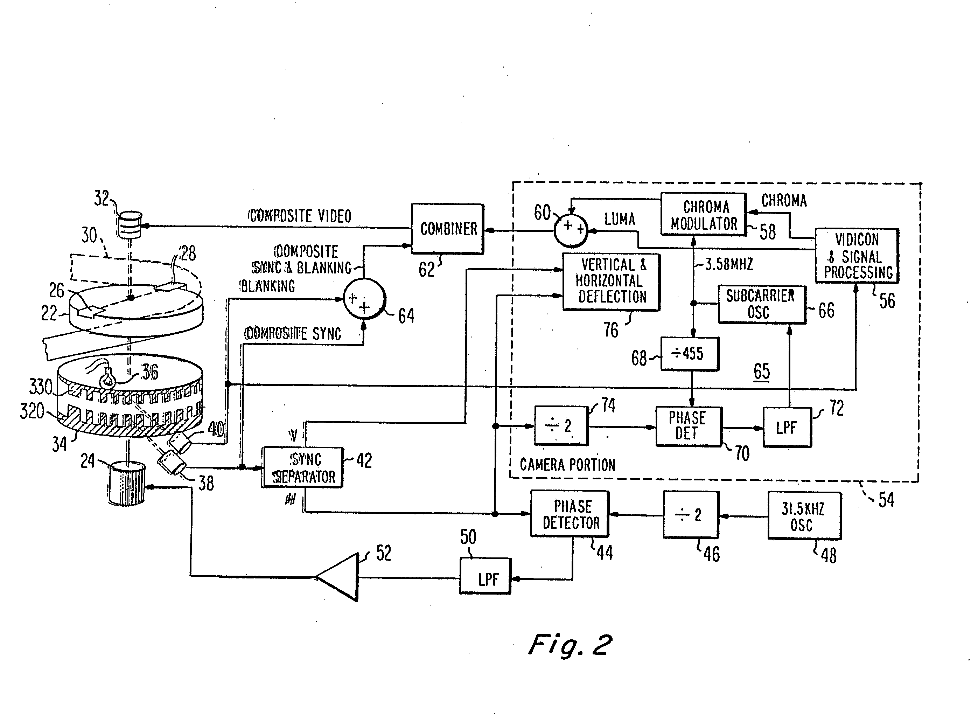

In Figure 2, a headwheel 22 (shown at the left of the figure) includes recording transducers 26 and 28 adapted for scanning across a magnetic tape 30 wrapped around a portion of the headwheel in known fashion and illustrated partially by phantom lines. As known, the tape 30 moves relatively slowly compared with the rotational velocity of headwheel 22 and in such a direction relative to the headwheel as to scan parallel tracks in a helical fashion upon the tape. Headwheel 22 is illustrated as being mechanically coupled to drive motor 24. Also coupled to headwheel 22 and motor 24 is a slip ring assembly 32 and a mechanical synchronizing signal generating wheel 34. Wheel 34 may for example be a transparent film upon which opaque printed patterns 320 and 330 define synchronizing signals and blanking signals, respectively. A lamp 36 within wheel 34 illuminates the interior and allows light to exit between the opaque portions. Photosensors 38 and 40 are fixedly mounted outside wheel 34 with their photosensitive surfaces directed towards lamp 36 from positions selected so that the synchronizing and blanking signals transduced thereby occur at times at which particular positions are taken by recording transducers 26 and 28 relative to the portion of the tape 30, wrapped around the headwheel 22. Vertical (V) and horizontal (H) synchronizing signals are transduced from wheel 34 by photosensor 38, and blanking signals at related times are transduced by photosensor 40.

In order to maintain a substantially constant velocity of headwheel 22, a phase-lock loop slaves the mechanically generated horizontal sync signals to a fixed-frequency signal. The phase-lock loop includes a sync signal separator 42 for separating the horizontal synchronizing signals from the composite synchronizing signals transduced by photosensor 38, and a phase detector 44 coupled to receive the separated horizontal sync signals. Also coupled to phase detector 44 are horizontal-rate signals from a divide-by-two frequency divider 46 driven by e.g., a 31.5 KHz oscillator 48. The output of the phase detector is applied to a low-pass filter (LPF) 50, the output of which drives a drive amplifier 52 which in turn controls the motor speed. Whenever the average velocity of the headwheel is such that the mechanically generated horizontal signals differ in rate from the reference horizontal signals, the loop acts to make them equal. However, because of the bandwidth limitations of LPF 50 and the power limitations of amplifier 52, the loop cannot correct instantaneously. Consequently, short periods of substantial velocity change can be expected due to mechanical motion of the recorder.

In the shown illustrative embodiment of the invention, the synchronizing or timing signals derived from wheel 34 are used to control the scanning rate of the camera portion 54 of the arrangement. Camera portion 54 includes a block 56 representing the vidicon 18 (Fig. 1) together with some ancillary signal processing. Camera portion 54 also includes the vertical and horizontal deflection circuits and windings associated with the vidicon 18 and which are schematically illustrated together as a block 76. As will be described hereafter, the vertical and/or the horizontal deflection rates are controlled to cause the scanning rate to speed up or slow down in consonance with the appropriate mechanically derived vertical and horizontal synchronizing signals from the wheel 34. The ancillary processing includes gamma correction and video blanking circuits.

Blanking signals from photosensor 40 are coupled to block 56 to operate the video blanking circuits for eliminating video during the blanking interval. In the event that the block 56 includes a single imaging device with a color filter for generating the video, it may also include luminance and chrominance demodulators. As is known, the chroma signals produced by block 56 are coupled to a chroma modulator to which is applied a 3.58 MHz (for example) subcarrier generated as described hereafter, and the modulated chrominance produced by modulator 58 is combined with luminance information in an adder 60 to produce composite luminance and chrominance information which is applied to a combiner 62. In combiner 62, composite sync and blanking information from an adder 64 is combined with the composite chrominance and luminance information to produce composite video which is applied to slip rings 32 for coupling to recording transducers 26 and 28.

In the shown illustrative embodiment of the invention, the chroma subcarrier is locked to the mechanically generated timing signals. A subcarrier oscillator 66 is coupled in a phase-lock loop with a frequency divider 68 which divides by 455, a phase detector 70 and a low-pass filter 72. The divided subcarrier oscillator signal is compared in phase detector 70 with the H sync signal divided in a frequency divider 74 by the factor 2. Thus, the subcarrier oscillator is locked to e.g., 455 times half the line rate defined by the horizontal sync pulses derived from the wheel 34.

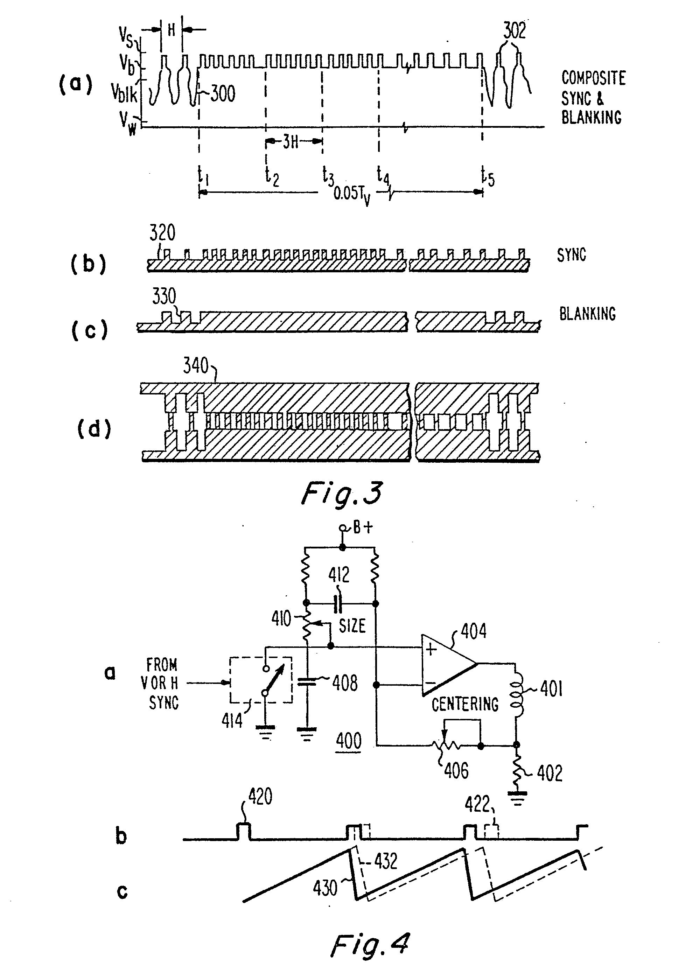

Figure 3a illustrates an amplitude-time plot of a standard monochrome television signal 300 over an interval including the vertical blanking interval. As known, the vertical blanking interval extends from time t1 to t5 and the active video interval extends from time t5 to the next following time t1. Within each active video interval are sync signals illustrated as 302. During the vertical blanking interval, the horizontal-rate pulses also occur in the interval t4—t5, while double-rate pulses occur in the interval t1—t4. In the interval t2—t3, the double-rate pulses occur as serrations in a higher-level vertical synchronizing pulse. In order to mechanically generate signals representative of the synchronizing component required for a standard sync signal, the imprinting 320 of a portion of transparent wheel 34 is as illustrated in developed view in Figure 3b. In Figure 3b, the opaque portions are illustrated and can be seen to correspond with those portions of the signal of 3a lying between synchronizing voltage level Vs and blanking voltage level Vb. Photosensor 38 responds to the interruption of light passing through transparent wheel 34 occasioned by the opaque pattern of Figure 3b to produce the sync signal. With two transducers 26 and 28 as illustrated in Figure 2, one television field is transduced onto the tape for each half-rotation of the headwheel. Consequently, the sync pattern repeats twice around wheel 34. That is to say, wheel 34 includes a 2-field sync pattern including H sync pulses for two active video intervals. It should be noted that the V sync pattern for the second of the two fields differs slightly from that shown in Figure 3a, and consequently, the corresponding pattern for Figure 3b must be arranged to correspond.

As illustrated in Figure 2, the transparent wheel 34 includes an upper imprinted portion 330, a portion of which is developed form is illustrated in Figure 3c. It should be noted that pattern 330 is upside down in Figure 3c compared with its position as illustrated in Figure 2. The raised portions of opaque pattern 330 represent those portions of the rotation of headwheel 22 at which it is expected that the signal will be blanked. As such, pattern 330 can be seen to correspond to those portions of signal 300 between blanking level Vb and black level Vblk.

Instead of using two photosensors 38 and 40 to produce separate composite sync and blanking signals, respectively, a single photosensor responsive to a multitude of values can be used together with a pattern such as developed pattern 340 of Figure 3d. Comparison of pattern 340 with the composite sync and blanking portions of waveform 300 reveals that the opaque portion takes on different dimensions for the various components of the blanking signal. When a single transducer is used in this fashion, separation of the vertical and horizontal sync signals is required as illustrated in Figure 2 but adder 64 may be eliminated.

Of course, annular magnetic strips appropriately magnetized with indicia representing the synchronizing and/or blanking signals may be used instead of wheel 34, in which case magnetic transducers would be used to transduce the mechanically produced synchronizing and blanking signals instead of photosensors 38 and 40.

Figure 4 illustrates a deflection circuit 400 as described in U.S. Patent U.S.—A—4 277 729 (Application Serial No. 094 287) filed November 19, 1979 in the name of R. L. Rodgers, III. As illustrated in Figure 4a, a deflection winding 401 in series with a current-sensing resistor 402 is driven by an amplifier 404. Voltage feedback representative of the current is provided by way of a centering resistor 406 to the inverting input of amplifier 404. The signal applied to the noninverting input of amplifier 404 is a sawtooth generated by charging a capacitor 408 through a SIZE control resistor 410. A capacitor 412 coupled to the upper end of resistor 410 and to the inverting input bootstraps the output signal to resistor 410 to maintain a constant voltage there-across, thereby providing a constant charging current and a linear sawtooth. A controllable switch illustrated as 414 recurrently discharges capacitor 408 in response to a synchronizing signal. The deflection circuit of Figure 4a can be used for either vertical or horizontal deflection, and the appropriate sync signal is used to discharge the capacitor. Regularly recurring sync pulses 420 are illustrated by solid lines in Figure 4b. The effect on the sync pulses when headwheel 22 is slowing down is illustrated by dotted-line pulses such as 422. The effect of the change in the periodic pulse rate upon the sawtooth deflection current can be understood by comparing solid line portions 430 representing the deflection current with regularly recurring sync pulses 420 with dotted-line portions 432 representing the deflection current in response to sync pulses 422 resulting from a slowing of headwheel 22. It can be seen that the peak amplitude reached by the sawtooth waveform is greater in the case of the slowed waveform. In the case of increasing speed of headwheel 22, the sync pulses would be more closely spaced in time and the peak amplitude of the sawtooth deflection waveform would shrink. The result of the changes in peak amplitude of the deflection waveform is change in the effective size of the image scanned by the transducer. Thus, in addition to changing the placement of sync signals on the recording medium, changes in angular velocity of the headwheel also change the apparent size of the recorded image.

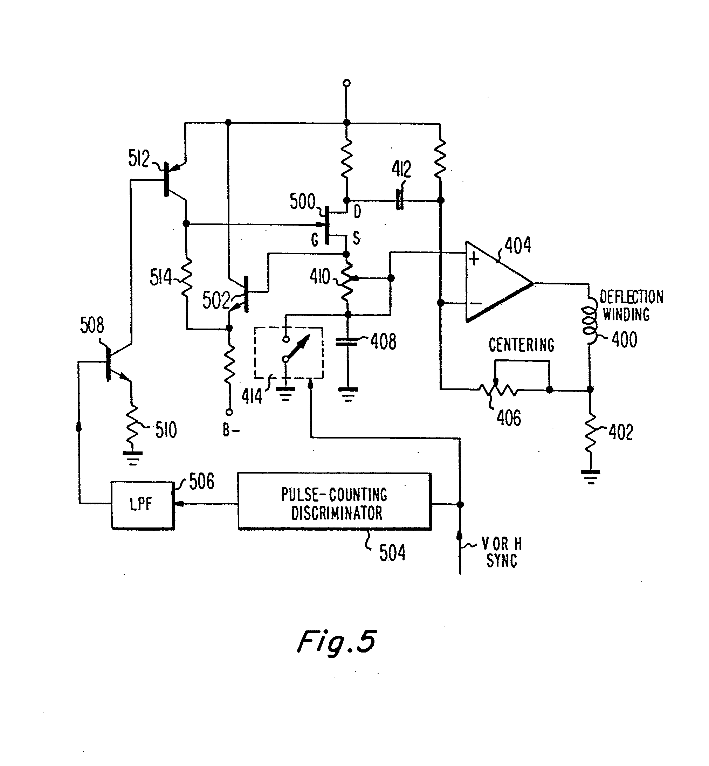

Figure 5 illustrates an arrangement for correcting for image size changes. In Figure 5, elements corresponding to those of Figure 4 are provided with the same reference numbers. In Figure 5, a field-effect transistor (FET) 500 is coupled in series with size control resistor 410. FET 500 is operated as a resistor the magnitude of which is dependent upon source-gate voltage. An emitter-follower connected transistor 502 has its base connected to the source of transistor 500. The emitter of transistor 502 is at approximately the same voltage as the source of FET 500. The voltage from gate to source of transistor 500 is controlled by a pulse-counting discriminator 504 coupled to receive the appropriate vertical or horizontal synchronizing signals for producing in conjunction with a low-pass filter 506 a signal representative of the time integral of the pulses. This time integral signal is representative of the pulse rate and is applied across the base-emitter junction of transistor 508 and resistor 510 to produce a current representative of the pulse rate. The current is transduced by a PNP transistor 512 to a resistor 514 for controlling the gate-source voltage in response to the synchronizing pulse rate. As the pulse rate changes, the resistance of FET 500 changes incrementally so as to change the rate of charge of sawtooth capacitor 408 thereby maintaining a constant peak-to-peak amplitude of the deflection.

Other embodiments of the invention will be obvious to those skilled in the art. For example, standard television sync signals may be generated electronically from non-standard sync signals transduced from wheel 34. The effect on speed can result from other rotary members such as capstans or disc turntables, and consequently the mechanically derived sync or timing signal may be derived from capstans, idlers, turntables and the like. The timing signals to be regularly placed on the recording medium may as described be vertical or horizontal synchronizing signals, chroma burst or subcarrier signals or other video timing signals.

## Claims

1. A combination of a television camera for generating television signals and an apparatus for recording the signals on a recording medium (30), comprising:
an image transducing means (56, 76) for producing image signals representing an image, by recurrently scanning the image, the scanning of the image being controllable;
record transducing means (22, 26, 28) for transducing the signals onto the recording medium; rotatable means (24) for establishing relative movement between the record transducing means and the recording medium;
indicating means (34, 36, 38, 42) coupled to the rotatable means for indicating its rate of rotation;
rotation control means (44, 46, 48, 50, 52) including a source (48) of reference signals having a predetermined frequency characteristic representative of a desired rate of rotation of the rotatable means, the rotation control means being responsive to the indicated and desired rates of rotation to tend to cause the rotatable means (24) to rotate at the desired rate over a relatively long term and
image transducer control means (414, 500—514) responsive to the indicated rate of rotation to vary the rate of recurrence of the scanning and the rate of scanning in response to relatively short-term variations in the rate of rotation so as to place the image signals on the recording medium as if the rotation took place at the desired rate.

2. A combination according to claim 1, wherein the recording medium is a magnetic tape (30), and the rotatable means is a headwheel (22) of a helical scan tape recorder.

3. A combination according to claim 2 wherein the indicating means comprises means (34) coupled to rotate with the headwheel (22) and carrying indicia (330, 320) from which can be derived timing signals (V, H) representing at least the timing components of television signals associated with image-scanning the signals also indicating the said rate of rotation, and means (36, 38) responsive to the indicia for producing the timing signals.

4. A combination according to claim 3 wherein the image transducer control means (414, 500, 514) is responsive to the said timing signals to control the scanning.

5. A combination according to claim 3 or 4 wherein the indicia comprise direct representations of television horizontal and vertical synchronization pulses whereby the timing signals comprise such synchronization pulses.

6. A combination according to claim 5, further comprising means (62) for combining the image signals produced by the image transducer with the timing signals produced by the indicating means and for applying the combined signals to the record transducing means.

7. A combination according to claim 4, 5 or 6 wherein the image transducer means further comprises a controllable chroma subcarrier oscillator (66) phase-locked with the timing signals (H) for controlling the frequency of the chroma subcarrier so as to allow it to be recorded as if the rotation took place at the desired rate and means (60, 58) for producing luma signals combined with chroma signals modulated onto the carrier as said image signals.

8. A combination according to any preceding claim wherein the rate of scanning is controlled by a ramp signal generating means (400, 414) for generating a ramp signal having a peak value representing an extreme of a said scan, and further comprising amplitude control means (500, 514) for maintaining the peak value constant in the presence of the variation of the rate of recurrence of scanning.

9. A combination according to claim 8, wherein amplitude control means comprises controllable current means (500).

10. A combination according to claim 9, wherein the controllable current means comprises a field-effect transistor (500).

## Revendications

1. Un ensemble constitué d'une caméra de télévision pour engendrer des signaux de télévision et d'un appareil d'enregistrement des signaux sur un support d'enregistrement (30), comprenant:

un moyen transducteur d'image (56, 76) pour la production de signaux d'image représentant une image, par balayage récurrent de l'image, le balayage de l'image pouvant être commandé;

des moyens transducteurs d'enregistrement (22, 26, 28) pour la conversion et l'application des signaux à un support d'enregistrement; des moyens rotatifs (24) pour la création d'un mouvement relatif entre les moyens transducteurs d'enregistrement et le milieu d'enregistrement;

des moyens indicateurs (34, 36, 38, 42) reliés au moyen rotatif pour indiquer la vitesse de rotation;

des moyens de commande de rotation (44, 46, 48, 50, 52) comprenant une source (48) de signaux de référence ayant une caractéristique de fréquence prédéterminée représentative d'une vitesse de rotation désirée des moyens rotatifs, les moyens de commande de rotation étant sensibles aux vitesses de rotation indiquée et désirée et tendant à faire tourner les moyens rotatifs (24) à la vitesse désirée pendant une durée relativement longue; et

des moyens (414, 500—514) de commande du transducteur d'image, sensibles à la vitesse de rotation indiquée afin de faire varier la fréquence de récurrence du balayage et la vitesse de balayage en réponse à des variations de durée relativement courte de la vitesse de rotation de manière à placer les signaux d'image sur le support d'enregistrement comme si la rotation s'effectuait à la vitesse désirée.

2. Un ensemble suivant la revendication 1, dans lequel le support d'enregistrement est une bande magnétique (30) et les moyens rotatifs sont une plaque porte-têtes (22) d'un enregistreur magnétique à balayage hélicoïdal.

3. Un ensemble suivant la revendication 2 dans lequel les moyens indicateurs comprennent des moyens (34) montés de manière à tourner avec le disque porte-têtes (22) et portant des signes (330, 320) permettant d'obtenir des signaux d'horloge (V, H) représentant au moins les composantes d'horloge de signaux de télévision associés au balayage d'image, les signaux indiquant aussi ladite vitesse de rotation, et des moyens (36, 38) sensibles aux signes pour la production des signaux d'horloge.

4. Un ensemble suivant la revendication 3 dans lequel les moyens de commande (414, 500, 514) du transducteur d'image est sensible auxdits signaux d'horloge afin de commander le balayage.

5. Un ensemble suivant la revendication 3 ou 4 dans lequel les signes comprennent des représentations directes d'impulsions de synchronisation horizontale et verticale de télévision, les signaux d'horloge comprenant ainsi ces impulsions de synchronisation.

6. Un ensemble suivant la revendication 5, comprenant en outre des moyens (62) pour combiner les signaux d'image produits par le transducteur d'image avec les signaux d'horloge produits par des moyens indicateurs et pour appliquer les signaux combinés aux moyens transducteurs d'enregistrement.

7. Un ensemble suivant la revendication 4, 5 ou 6 dans lequel le moyen transducteur d'image comprend en outer un oscillateur (66) de sous-porteuse de chrominance susceptible d'être commandé, verrouillé en phase avec les signaux d'horloge (H) pour commander la fréquence de la sous-porteuse de chrominance de manière à permettre son enregistrement comme si la rotation s'effectuait à la vitesse désirée et des moyens (60, 58) pour la production de signaux de luminace combinés avec les signaux de chrominance sur le support en tant que lesdits signaux d'image.

8. Un ensemble suivant l'une quelconque des revendications précédentes dans lequel la vitesse de balayage est commandée par des moyens (400, 414) de génération de signaux en dents de scie à valeur de crête représentant un extrême d'un balayage précité, et comprenant en outre des moyens (500, 514) de commande d'amplitude pour maintenir la valeur de crête constante en présence de la variation de la fréquence de récurrence du balayage.

9. Un ensemble suivant la revendication 8, dans lequel les moyens de commande d'amplitude comprennent un moyen (500) à courant commandé.

10. Un ensemble suivant la revendication 9, dans lequel le moyen à courant commandé comprend un transistor à effet de champ (500).

**Patentansprüche**

1. Kombination aus einer Fernsehkamera zur Erzeugung von Fernsehsignalen und einem Gerät zur Aufzeichnung von Signalen auf einem Aufzeichnungsmedium (30) mit

einer Bildwandlereinrichtung (56, 76) zur Erzeugung von ein Bild darstellenden Bildsignalen durch wiederholte Abtastung des Bildes, wobei die Bildabtastung steuerbar ist,

mit einer Aufzeichnungswandlereinrichtung (22, 26, 28) zur Übertragung der Signale auf das Aufzeichnungsmedium, mit einer Rotor (24) zur Erzeugung einer Relativbewegung zwischen der Aufzeichnungsübertragungseinrichtung und dem Aufzeichnungsmedium,

mit einer Anseigeeinrichtung (34, 36, 38, 42), die mit dem Rotor zur Anzeige von dessen Drehzahl gekoppelt ist,

mit einer Drehzahlsteuereinrichtung (44, 46, 48, 50, 52), die eine Quelle (48) von Bezugssignalen enthält, welche eine vorbestimmte Frequenz als Maß für die dewünschte Drehzahl des Rotors hat, wobei die Drehzahlsteuereinrichtung aufgrund der angezeigten und der gewünschten Drehzahl den Rotor (24) mit der gewünschten Drehzahl über eine relativ lange Zeit rotieren zu lassen sucht, und mit einer Bildwandlersteuereinrichtung (414, 500 bis 514), die in Abhängigkeit von der angezeigten Drehzahl die Wiederholungsrate der Abtastung und die Abtastrate in Abhängigkeit von relativ kurzzeitigen Änderen der Drehzahl so verändert, daß die Bildsignale auf dem Aufzeichnungsmedium in einer Weise plazier werden, wie es bei der gewünschten Drehzahl der Fall wäre.

2. Kombination nach Anspruch 1, dadurch gekennzeichnet, daß das Aufzeichnungsmedium ein Magnetband (30) ist und daß der Rotor ein Kopfrad (22) eines Bandrecorders mit Spiralabtastung ist.

3. Kombination nach Anspruch 2, dadurch gekennzeichnet, daß die Anzeigeeinrichtung eine Einrichtung (34), die mit dem Kopfrad (22) zur Drehung mit diesem gekoppelt ist und Markierungen (330, 320) trägt, aus denen Zeitsteuersignale (V, H) ableitbar sind, welche mindestens die zur Bildabtastung der Signale gehörigen Zeitsteuerkomponenten der Fernsehsignale darstellen und außerdem die Drehzahl angeben, und eine Einrichtung (36, 38), welche aufgrund der Markierungen die Zeitsteuersignale erzeigt, aufweist.

4. Kombination nach Anspruch 3, dadurch gekennzeichnet, daß die Bildwandlersteuereinrichtung (414, 500, 514) aufgrund der Zeitsteuersignale die Abtastung regelt.

5. Kombination nach Anspruch 3 oder 4, dadurch gekennzeichnet, daß die Markierungen unmittelbare Darstellungen der Fernseh-Horizontal- und Vertikalsynchronimpulse sind, wobei die Zeitsteuersignale solche Synchronimpulse umfassen.

6. Kombination nach Anspruch 5, gekennzeichnet durch eine Kombinationseinrichtung (62) zur Kombinierung der vom Bildwandler erzeugten Bildsignale mit def aufgrund der Markierungen erzeugten Zeitsteuersignale und zur Zuführung der Kombinationssignale zur Aufzeichnungswandlereinrichtung.

7. Kombination nach Anspruch 4, 5 oder 6, dadurch gekennzeichnet, daß die Bildwandlereinrichtung weiterhin einen regelbaren Farbträgeroszillator (66), der mit den Zeitsteuersignalen (H) zur Regelung der Frequenz des Farbträgers phasensynchronisiert ist, so daß diese so aufgezeichnet werden können, als wenn die gewünschte Drehzahl vorläge, und eine Einrichtung (60, 58) enthält, welche Leuchtdichtesignale kombiniert mit auf dem Träger modulierten Farbsignalen als die Bildsignale erzeugt.

8. Kombination nach einem der vorstehenden Ansprüche, dadurch gekennzeichnet, daß die Abtastrate mit Hilfe eines Rampensignalgenerators (400, 414) geregelt wird, der ein Rampensignal erzeugt, dessen Spitzenwert einen Extremwert der Ablenkung darstellt, und daß weiterhin ein Amplitudenregler (500, 514) vorgesehen ist, welcher die Spitzenamplitude bei Änderungen der Wiederholungsrate der Abtastung konstant hält.

9. Kombination nach Anspruch 8, dadurch gekennzeichnet, daß der Amplitudenregler einen Stromeinsteller (500) aufweist.

10. Kombination nach Anspruch 9, dadurch gekennzeichnet, daß der Stromeinsteller einen Feldeffekttransistor (500) enthält.

*Fig.1*

Fig. 2

Fig.3

Fig.4

3

*Fig.5*